# EUROPEAN PATENT APPLICATION

(11) **EP 4 748 595 A1**
(43) Date of publication of application: **27.05.2026**
(21) Application number: 25218158.1
(22) Date of filing: 24.11.2025
(51) Int. Cl.: B60C 23/04

(54) **TIRE LEAK RATE DETECTION AND NOTIFICATION SYSTEM AND METHOD**

(30) Priority: 26.11.2024 US 202463725247 P; 04.11.2025 US 202519379255
(71) Applicant: The Goodyear Tire & Rubber Company, Akron, OH 44316 (US)
(72) Inventor: SHARMA, Sparsh, L-1610 Luxembourg (LU); SINGH, Kanwar Bharat, Akron, 44316 (US); SON, Roman, L-7750 Colmar-Berg (LU)
(74) Representative: Kutsch, Bernd

(57) **Abstract**

A system and method for detection of a pressure leak rate in a tire (12) supporting a vehicle (14) is disclosed. The system (10) comprises a sensor (30) mounted on the tire (12) for measuring a pressure (52) of the tire (12) and means for transmitting measured pressure data from the sensor (30) to a processor (38, 48). The processor (38, 48) is configured to: receive a plurality of measured tire pressures; batch the plurality of measured tire pressures according to a batch commencing on a batch starting point (62); detect a changepoint in measured tire pressures with a changepoint detection module (66); add a current measured tire pressure to the batch (78) in a storage queue (70) when the detection module (66) does not detect the changepoint; calculate a leak rate (80) for the batch (78) with a leak rate determination module (86) when the storage queue (70) reaches a predetermined size; compare the leak rate (80) to a predetermined threshold with a comparison module (88); issue an alert with an alert module (92) when the leak rate (80) crosses the predetermined threshold; and transmit the alert to at least one of a vehicle control system and a display device (50) for actuation of the vehicle (14) in response to the alert.

## Description

### Field of the Invention

The invention relates generally to tire monitoring systems and methods. More particularly, the invention relates to systems and methods that monitor conditions in a tire, such as tire pressure. Specifically, the invention is directed to a system and a method that provides detection of a tire pressure leak rate and selectively issues a notification based on the leak rate.

### Background of the Invention

Vehicle tires, and particularly pneumatic tires, typically have certain conditions or parameters that are beneficial to monitor during vehicle operation. For example, monitoring the pressure of a pneumatic tire may be helpful in assessing the condition and/or performance of the tire, as a low pressure may indicate that there is an issue with the tire.

To monitor tire pressure, techniques have been developed to measure the pressure inside the tire cavity using sensors that are attached to the tire. Such techniques obtain pressure data from the sensors. In the event that the measured pressure is below a threshold value, a notification or alert may be generated.

However, many prior art systems only trigger a notification when the measured pressure is below a threshold value, rather than determining a leak rate, or loss of air pressure in the tire per unit time. Determination of a leak rate enables downward pressure trends to be detected, so that preventive steps may be taken before the measured pressure falls below a threshold value.

As a result, there is a need in the art for a system that provides detection of a tire pressure leak rate, and which is capable of selectively issuing a notification based on the leak rate.

### Summary of the Invention

The invention relates to a system in accordance with claim 1 and to a method in accordance with claim 15.

Dependent claims refer to preferred embodiments of the invention.

According to an aspect of an exemplary embodiment of the invention, a system for detection of a pressure leak rate in a tire is provided. The tire supports a vehicle. The system includes a sensor mounted on the tire for measuring a pressure of the tire and means for transmitting measured pressure data from the sensor to a processor. The processor is configured to receive a plurality of measured tire pressures and batch the plurality of measured tire pressures according to a batch commencing on a batch starting point. The processor is also configured to detect a changepoint in measured tire pressures with a changepoint detection module and add a current measured tire pressure to the batch in a storage queue when the detection module does not detect the changepoint. The processor is further configured to calculate a leak rate for the batch with a leak rate determination module when the storage queue reaches a predetermined size and compare the leak rate to a predetermined threshold with a comparison module. The processor is configured to issue an alert with an alert module when the leak rate crosses the predetermined threshold and transmit the alert to at least one of a vehicle control system and a display device for actuation of the vehicle in response to the alert.

### Brief Description of the Drawings

The invention will be described by way of example and with reference to the accompanying drawings, in which:
Figure 1 is a schematic image of a vehicle and schematic perspective view of a tire that employ an exemplary embodiment of the system of the present invention for detection of a tire pressure leak rate and notification, showing the tire partially in section;
Figure 2 is a schematic plan view of the vehicle shown in Figure 1;
Figure 3 is a schematic perspective view of the vehicle shown in Figure 1 with a representation of data transmission to a cloud-based server and to a display device;
Figure 4 is a flow diagram showing aspects of an exemplary embodiment of the system of the present invention for detection of a tire pressure leak rate and notification;
Figure 5 is a graphical representation showing additional aspects of the system shown in Figure 4; and
Figure 6 is a graphical representation showing additional aspects of the system shown in Figure 4.

Similar numerals refer to similar parts throughout the drawings.

### Definitions

"Axial" and "axially" means lines or directions that are parallel to the axis of rotation of the tire.

"CAN bus" or "CAN bus system" is an abbreviation for controller area network system, which is a vehicle bus standard designed to allow microcontrollers and devices to communicate with each other within a vehicle, enabling communication between specific vehicle sensing and/or control systems.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Inner liner" means the layer or layers of elastomer or other material that form the inside surface of a tubeless tire and that contain the inflating fluid within the tire.

"Lateral" means an axial direction.

"Radial" and "radially" means directions radially toward or away from the axis of rotation of the tire.

"Tread element" or "traction element" means a rib or a block element defined by a shape having adjacent grooves.

### Detailed Description of Preferred Embodiments of the Invention

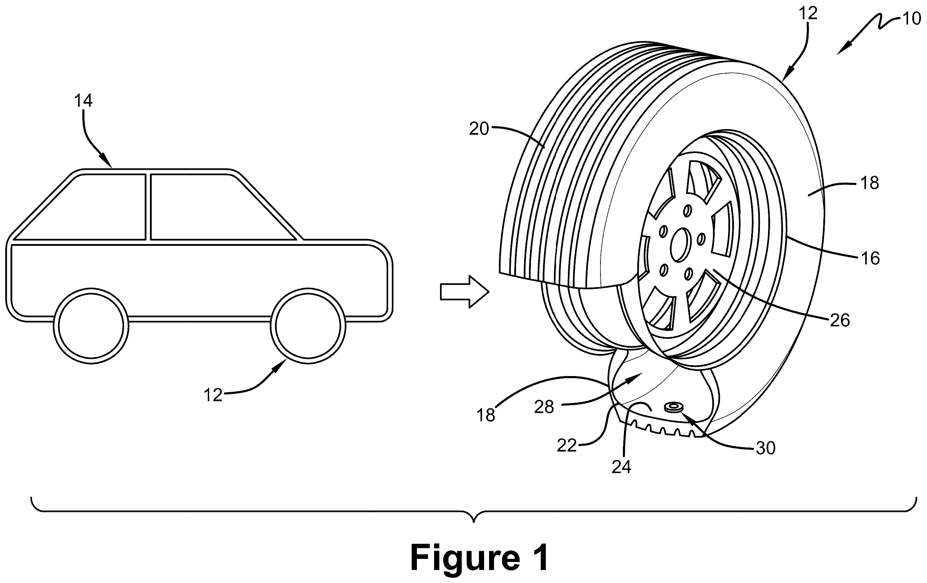

Turning now to Figures 1 through 6, an exemplary embodiment of a system 10 of the present invention for detection of a tire pressure leak rate and notification is presented. With particular reference to Figure 1, the system 10 monitors the pressure in each tire 12 supporting a vehicle 14. While the vehicle 14 is depicted as a passenger car, the invention is not to be so restricted. The principles of the invention find application in other vehicle categories such as commercial trucks, off-the-road vehicles, and the like, in which vehicles may be supported by more or fewer tires 12. In addition, the invention finds application in a single vehicle 14 or in fleets of vehicles.

Each tire 12 includes a pair of bead areas 16 (only one shown) and a bead core (not shown) embedded in each bead area. Each one of a pair of sidewalls 18 extends radially outward from a respective bead area 16 to a ground-contacting tread 20. The tire 12 is reinforced by a carcass 22 that toroidally extends from one bead area 16 to the other bead area, as known to those skilled in the art. An innerliner 24 is formed on the inside surface of the carcass 22. The tire 12 is mounted on a wheel 26 in a manner known to those skilled in the art and, when mounted, forms an internal cavity 28 that is filled with a pressurized fluid, such as air.

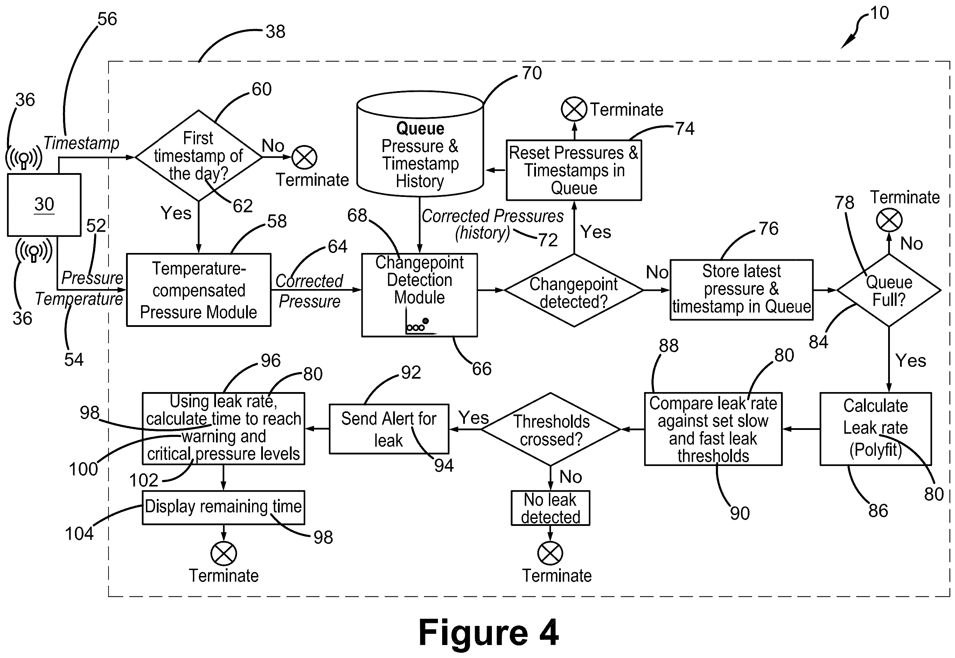

A sensor unit 30 may be attached to the innerliner 24 of each tire 12 by means such as an adhesive for the purpose of detecting certain real-time tire parameters inside the tire, such as tire pressure 52 and temperature 54 (Figure 4). It is to be understood that the sensor unit 30 may be attached in such a manner, or to other components of the tire 12, such as between layers of the carcass 22, on or in one of the sidewalls 18, on or in the tread 20, a combination thereof, and/or to a valve stem (not shown) of the tire. For the purpose of convenience, reference herein shall be made to mounting of the sensor unit 30 on the tire 12, with the understanding that mounting includes all such attachment.

Preferably, the sensor unit 30 is a tire pressure monitoring system (TPMS) sensor, of a type that is commercially available, and may be of any known configuration. For the purpose of convenience, the sensor unit 30 shall be referred to as a TPMS sensor. Each TPMS sensor 30 preferably also includes electronic memory capacity for storing identification (ID) information for each tire 12, known as tire ID information. Alternatively, tire ID information may be included in another sensor unit, or in a separate tire ID storage medium, such as a tire ID tag. The tire ID information may include manufacturing information for the tire 12, a service history of the tire, specific features and parameters of the tire, and/or mechanical characteristics of the tire.

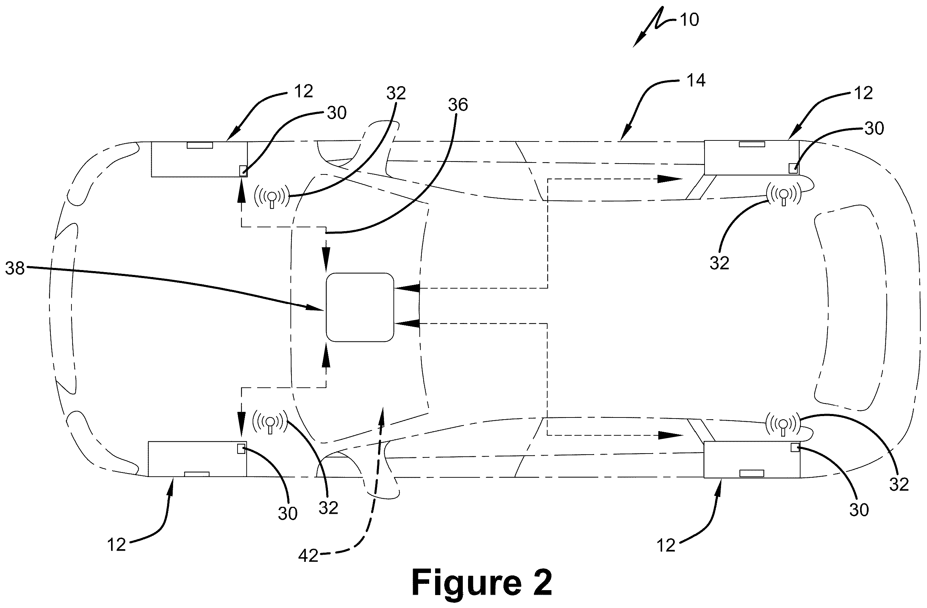

Turning now to Figure 2, each TMPS sensor 30 preferably includes a respective antenna 32 for wireless transmission 36 of the measured tire pressure 52 and temperature 54, as well as tire ID data, to a processor 38. The processor 38 may be mounted on the vehicle 14 as shown, or may be integrated into the TPMS sensor 30. For the purpose of convenience, the processor 38 will be described as being mounted on the vehicle 14, with the understanding that the processor may alternatively be integrated into the TPMS sensor 30. Preferably, the processor 38 is in electronic communication with or integrated into an electronic system of the vehicle 14, such as the vehicle CAN bus system 42, which is referred to as the CAN bus.

Aspects of the system 10 preferably are executed on the processor 38 or another processor that is accessible through the vehicle CAN bus 42, which enables input of data from the TMPS sensor 30, as well as input of data from other sensors that are in electronic communication with the CAN bus. In this manner, the tire pressure monitoring system 10 enables direct measurement of tire pressure 52 and temperature 54 with the TPMS sensor 30, and transmission of the measurement data to the processor 38. Tire ID information preferably is also transmitted from the TPMS sensor 30 to the processor 38. The processor 38 preferably correlates the measured tire pressure 52, the measured tire temperature 54, and ID information for each tire 12 according to a measurement time, which is referred to as a timestamp 56 (Figure 4).

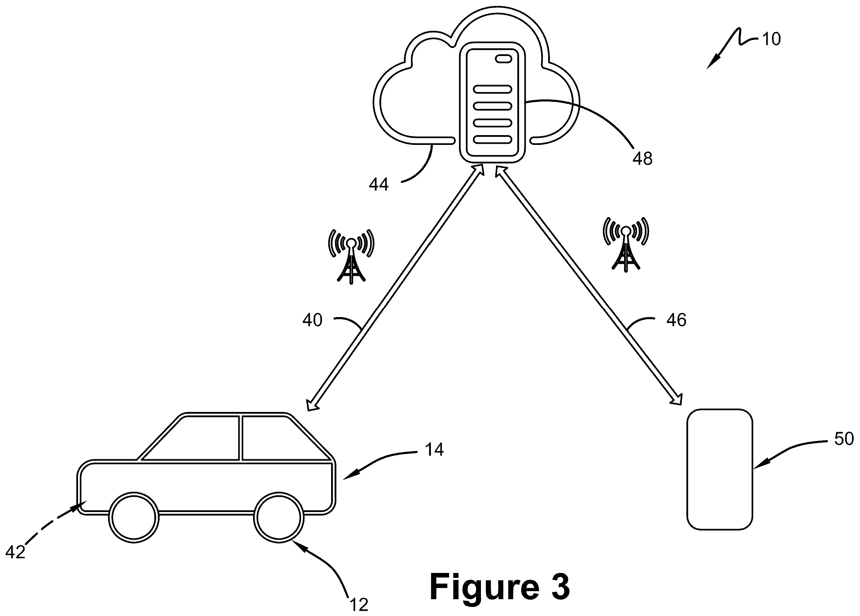

Referring to Figure 3, when the measured tire pressure 52, measured tire temperature 54, ID information, and timestamp 56 are correlated for each tire 12, the data may be wirelessly transmitted 40 from the processor 38 (Figure 2) and/or the CAN-bus 42 on the vehicle 14 to a remote processor 48, such as a processor in a cloud-based server 44. The cloud-based server 44 may execute aspects of the system 10. Output from the system 10 may be wirelessly transmitted 46 to a display device 50 that is accessible to an operator of the vehicle 14 or to a fleet manager.

Turning to Figure 4, the system 10 for detection of a tire pressure leak rate is in electronic communication with and is executed on the processor 38. The measured tire pressure 52 and the measured tire temperature 54 preferably are transmitted from the TPMS sensor 30 to a compensation module 58. The processor 38 correlates the measured tire pressure 52 and the measured tire temperature 54 according to a timestamp 56.

The system 10 preferably employs data store blocks, in which data is broken up into blocks or batches for storage, reading, and writing. By way of example, the data blocks of the system 10 may include batched measured tire pressures 52, with a batch commencing on a given batch start point 62, such as a first timestamp 56 of a day 62. A timestamp identifier 60 reviews the timestamp 56. If the timestamp 60 is the first timestamp for the day 62, the system 10 proceeds to the compensation module 58 to correct or compensate the measured pressure 52 for the impact of temperature.

The compensation module 58 may employ any technique for compensation of pressure due to temperature that is known to those skilled in the art, and generates a temperature-compensated pressure 64. For example, the ideal gas law may be employed to calculate the temperature-compensated pressure 64, as the volume of the tire cavity 28 is known, the measured pressure 52 is known, and the measured temperature 54 is known.

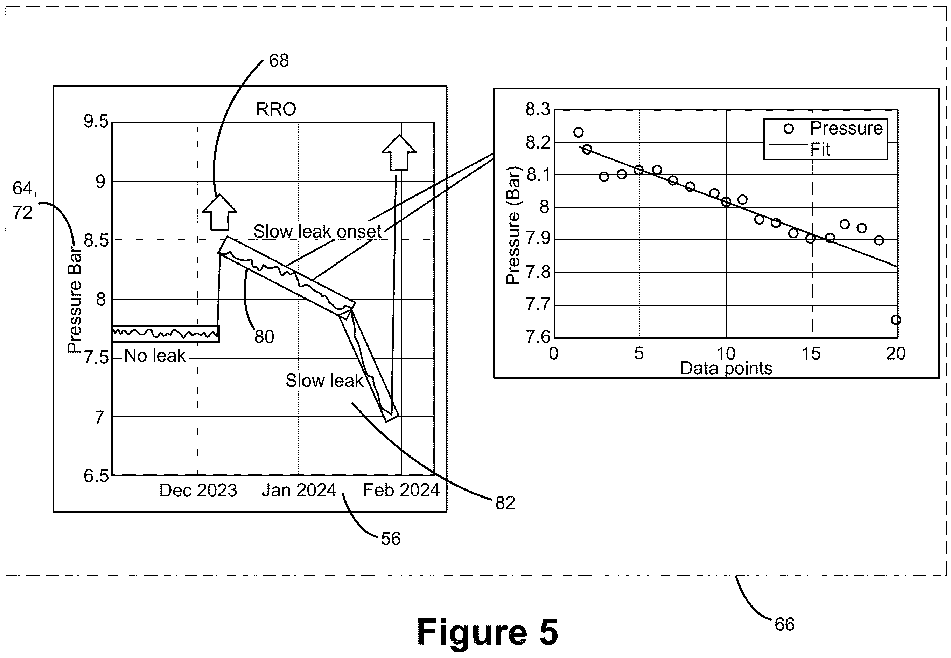

With additional reference to Figure 5, temperature compensated pressure measurements 64 may be plotted against their corresponding timestamps 56 or times of measurement in a changepoint detection module 66. More particularly, as measurement of tire pressure 52 by the TPMS sensor 30 continues, the distribution of the time series of pressure measurements may change, which occurs at a changepoint 68. The changepoint 68 corresponds to a change in a leak rate 80 of the tire 12, which is a loss of air pressure in the tire per unit time. The changepoint detection module 66 preferably employs current temperature compensated pressure measurements 64 and historical measurements 72 from a storage queue 70, which are plotted against their respective timestamps 56, to detect the changepoint 68.

The changepoint detection module 66 may employ any technique that is known to those skilled in the art to detect the changepoint 68. For example, the changepoint detection module 66 may calculate a moving standard deviation for the batch of temperature compensated pressure measurements 64 and historical measurements 72 and compare the moving standard deviation to a threshold to identify the changepoint 68.

If a changepoint 68 is detected by the changepoint detection module 66, a reset module 74 creates a new batch of data by resetting or restarting the historical measurements 72 with their corresponding timestamps 56 in the storage queue 70. If a changepoint 68 is not detected by the changepoint detection module 66, the current temperature compensated pressure measurement 64 and its corresponding timestamp 56 are added to the historical measurements 72 in the storage queue 70 by a storage module 76. The reset performed by the reset module 74 according to the changepoint 68 enables the temperature compensated pressure measurements 64, 72 to be batched according to the leak rate 80 in order to determine the onset of a pressure leak 82 and the progression of the leak.

With particular reference to Figure 4, a sizing module 84 determines when a predetermined size for a batch 78 is reached in the storage queue 70. For example, temperature compensated pressure measurements 64, 72 and their respective timestamps 56 may be batched for a time period of seven (7) days, ten (10) days, fourteen (14) days, or twenty-one (21) days. Of course, any number of days may be selected based on particular configuration requirements and memory capacity of the system 10. When the storage queue 70 reaches the predetermined size of the batch 78 of current temperature compensated pressure measurements 64 and historical temperature compensated pressure measurements 72 without detection of a changepoint 68, a leak rate determination module 86 calculates the leak rate 80 for the batch.

The leak rate determination module 86 may employ any technique that is known to those skilled in the art to calculate the leak rate 80 for the batch 78. For example, the leak rate determination module 86 may employ a polyfit function, which is used to determine the coefficients of a polynomial function that best fit the given set of data points in the batch 78. The polyfit function thus determines the leak rate 80 for the batch 78.

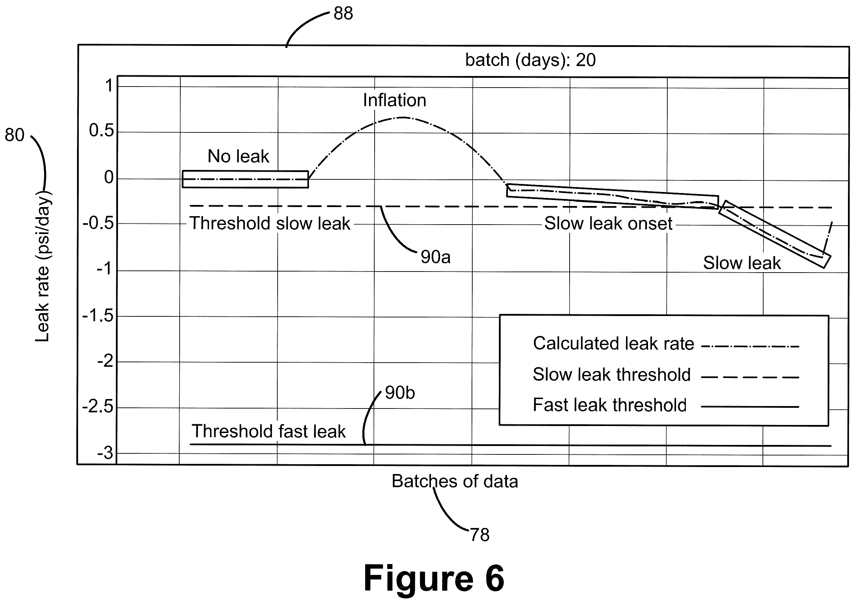

With additional reference to Figure 6, a comparison module 88 compares the leak rate 80 calculated by the leak rate determination module 86 for each respective batch 78 with predetermined thresholds 90. For example, the thresholds 90 may include a first threshold 90a that corresponds to a slow leak rate and a second threshold 90b that corresponds to a fast leak rate for the tire 12. By way of example, the first threshold 90a for the slow leak rate may be set at a leak rate of about 0.3 pounds per square inch (psi) per day, and the second threshold 90b for the fast leak rate may be set at a leak rate of about 2.9 psi per day.

If the leak rate 80 calculated by the leak rate determination module 86 for a batch 78 crosses a threshold 90, an alert module 92 issues an alert 94 that corresponds to the threshold that is crossed. For example, if the leak rate 80 crosses the first threshold 90a, the alert 94 issued by the alert module 92 indicates a slow leak in the tire 12. If the leak rate 80 crosses the second threshold 90b, the alert 94 issued by the alert module 92 indicates a fast leak in the tire 12.

If the leak rate 80 calculated by the leak rate determination module 86 for a batch 78 crosses a threshold 90, a time estimator 96 determines a time 98 to reach a warning pressure level 100 and/or a critical pressure level 102. For example, the warning pressure level 100 may be set slightly below a desired pressure level for the tire 12, such as about ten percent (10%) below the desired pressure level. The critical pressure level 102 may be set further below the desired pressure level for the tire 12, such as about twenty percent (20%) below the desired pressure level.

Because the current leak rate 80 is known, the thresholds 90 are known, and the warning pressure level 100 and/or critical pressure level 102 are known, the time remaining 98 to reach each respective pressure level may be determined by the time estimator 96. Once the time remaining 98 is determined by the time estimator 96, a time display 104 issues a notification of the remaining time for the tire 12 to reach the warning pressure level 100 and/or critical pressure level 102.

Returning to Figure 3, when the alert 94 and/or remaining time 98 are generated by the system 10, the alert and/or remaining time may be transmitted from the processor 38 through the vehicle CAN bus system 42 to an electronic control system of the vehicle. The alert 94 and/or remaining time 98 may then be employed to actuate and thus improve the function of a vehicle control system, such as an anti-lock brake system (ABS), electronic stability control system (ECS), and the like.

The alert 94 and/or remaining time 98 may also be wirelessly transmitted to the display device 50 that is accessible to an operator of the vehicle 14 or to a fleet manager. The operator may actuate the vehicle 14 to take appropriate action in response to the alert 94 and/or remaining time 98. The fleet manager may schedule an action or instruct the vehicle operator to actuate the vehicle 14 to take appropriate action in response to the alert 94 and/or remaining time 98.

In this manner, the system 10 of the present invention provides detection of a tire pressure leak rate 80 and selectively issues corresponding notifications 94, 98. The system 10 preferably employs data store blocks to calculate the leak rate 80 for batches 78 of measured tire pressures 52 over predetermined time periods. When the leak rate 80 for a batch 78 crosses a threshold 90 the system 10 issues a corresponding alert 94. The threshold may include a first threshold 90a that indicates a slow leak in the tire 12 and a second threshold 90b that indicates a fast leak in the tire. The system 10 also determines a time 98 to reach a warning pressure level 100 and/or a critical pressure level 102 based on the leak rate 80. The system 10 thus detects the tire pressure leak rate 80 and issues notifications 94, 98 while operating accurately and efficiently with low memory and computational requirements.

The present invention also includes a method of detecting a tire pressure leak rate. The method includes steps in accordance with the description that is presented above and shown in Figures 1 through 6.

It is to be understood that the structure of the above-described system 10 for detection of a tire pressure leak rate may be altered or rearranged, or components or steps known to those skilled in the art omitted or added, without affecting the overall concept or operation of the invention.

## Claims

1. A system for detection of a pressure leak rate in a tire (12), the tire supporting a vehicle (14), the system (10) comprising a sensor (30) mounted on the tire (12) for measuring a pressure (52) of the tire (12) and means for transmitting measured pressure data from the sensor (30) to a processor (38, 48), wherein the processor (38, 48) is configured to:
receive a plurality of measured tire pressures;
batch the plurality of measured tire pressures according to a batch commencing on a batch starting point (62);
detect a changepoint in measured tire pressures with a changepoint detection module (66);
add a current measured tire pressure to the batch (78) in a storage queue (70) when the detection module (66) does not detect the changepoint;
calculate a leak rate (80) for the batch (78) with a leak rate determination module (86) when the storage queue (70) reaches a predetermined size;
compare the leak rate (80) to a predetermined threshold with a comparison module (88);
issue an alert with an alert module (92) when the leak rate (80) crosses the predetermined threshold; and
transmit the alert to at least one of a vehicle control system and a display device (50) for actuation of the vehicle (14) in response to the alert.

2. The system of claim 1, wherein the processor (38, 48) is configured to correlate the measured tire pressure (52) according to a timestamp (56), the timestamp preferably indicating the batch starting point (62).

3. The system of claim 1 or, wherein the batch starting point (62) is a first timestamp of a day.

4. The system of at least one of the previous claims, wherein the sensor (30) is configured to also measure a temperature of the tire (12) and to transmit measured tire temperatures corresponding to respective tire pressures from the sensor (30) to the processor (38, 48).

5. The system of at least one of the previous claims, further comprising a compensation module (58) configured for receiving the measured tire pressures and the measured tire temperatures and for compensating the measured tire pressures for temperature.

6. The system of at least one of the previous claims, wherein the changepoint detection module (66) is configured to employ current temperature compensated pressure measurements and historical measurements from the storage queue (70); and/or wherein the changepoint detection module (66) is configured to calculate a moving standard deviation for the batch to identify the changepoint.

7. The system of at least one of the previous claims, wherein a storage module (76) is configured to add the current measured tire pressure to historical measurements in the storage queue (70).

8. The system of at least one of the previous claims, further comprising a reset module (74) that is configured to create a new batch of data by resetting the storage queue (70) when the changepoint is detected by the changepoint detection module (66); and/or further comprising a storage module (76) that is configured to determine when the storage queue (70) reaches the predetermined size, wherein the storage module (76) is configured to employ a predetermined time period, the predetermined time period preferably including at least one of seven days, ten days, fourteen days, and twenty-one days.

9. The system of at least one of the previous claims, wherein the leak rate determination module (86) is configured to employ a polyfit function to determine the leak rate for the batch.

10. The system of at least one of the previous claims, wherein the threshold is a first threshold that corresponds to a slow leak rate and the alert indicates a slow leak in the tire (12).

11. The system of at least one of the previous claims, further comprising a second threshold that corresponds to a fast leak rate and the alert indicates a fast leak in the tire (12).

12. The system of at least one of the previous claims, further comprising a time estimator (96) that is configured to determine a time to reach at least one of a warning pressure level (100) and a critical pressure level (102) when the leak rate crosses the predetermined threshold, the warning pressure level (100) being preferably 10% or 8% to 12% below a desired pressure level for the tire and the critical pressure level (102) being preferably 20% or 17% to 23% percent below the desired pressure level for the tire.

13. The system of at least one of the previous claims, wherein the time to reach at least one of a warning pressure level (100) and a critical pressure level (102) is transmitted to at least one of a vehicle control system and a display device (50) for actuation of the vehicle (14) in response to the time.

14. The system of at least one of the previous claims, wherein the display device (50) is accessible to an operator of the vehicle (14) and/or to a fleet manager.

15. A method for detection of a pressure leak rate in a tire (12), the tire (12) supporting a vehicle (14), the method comprising providing a system (10), preferably a system (10) in accordance with at least one of the previous claims, comprising a sensor (38, 48) mounted on the tire (12) for measuring a pressure (52) of the tire (12) and means for transmitting measured pressure data from the sensor (30) to a processor (38, 48), wherein the processor (38, 48):
receives a plurality of measured tire pressures;
batches the plurality of measured tire pressures according to a batch commencing on a batch starting point (62);
detects a changepoint in measured tire pressures with a changepoint detection module (66);
adds a current measured tire pressure to the batch (78) in a storage queue (70) when the detection module (66) does not detect the changepoint;
calculates a leak rate (80) for the batch (78) with a leak rate determination module (86) when the storage queue (70) reaches a predetermined size;
compares the leak rate (80) to a predetermined threshold with a comparison module (88);
issues an alert with an alert module (92) when the leak rate (80) crosses the predetermined threshold; and
transmits the alert to at least one of a vehicle control system and a display device (50) for actuation of the vehicle (14) in response to the alert.
